(19) Europäisches Patentamt

European Patent Office

Office européen des brevets

(11) **EP 1 018 816 A1**

(12) **EUROPEAN PATENT APPLICATION**

(43) Date of publication:
**12.07.2000 Bulletin 2000/28**

(51) Int. Cl.[7]: **H04L 1/18**

(21) Application number: **98308548.1**

(22) Date of filing: **19.10.1998**

(84) Designated Contracting States:
**AT BE CH CY DE DK ES FI FR GB GR IE IT LI LU MC NL PT SE**
Designated Extension States:
**AL LT LV MK RO SI**

(71) Applicant:
**LUCENT TECHNOLOGIES INC.**
**Murray Hill, New Jersey 07974-0636 (US)**

(72) Inventors:
• **Demetrescu, Cristian**
  **Swindon, Wilts SN5 8JZ (GB)**
• **Luschi, Carlo**
  **Oxford, Oxfordshire 0X1 1TX (GB)**
• **Sandell, Magnus**
  **Swindon, Wilts SN1 3PN (GB)**

(74) Representative:
**Williams, David John et al**
**Lucent Technologies UK Limited,**
**5 Mornington Road**
**Woodford Green, Essex IG8 0TU (GB)**

(54) **Accumulative ARQ method and system**

(57)    There is disclosed a method of recovering a received packet comprising the steps of: generating a soft value for each bit of the received packet; storing the soft values of the received packet; performing an error check on the received packet; and responsive to detection of an error:

i) receiving a retransmission of the packet;
ii) generating a soft value for each bit of the retransmitted packet;
iii) combining each generated soft value with the respective last stored soft values;

iv) storing the combined soft values;
v) performing an error check based on the thus combined soft values; and
vi) responsive to detection of an error repeating steps i) to v).

Circuitry for implementing such a method in a receiver is also disclosed.

FIG. 2

EP 1 018 816 A1

## Description

### Field of the Invention

This invention relates to communication systems that utilise packet retransmission schemes to correct errors, and particularly but not exclusively to mobile telecommunications systems utilising such schemes.

### Background to the Invention

Digital mobile communication using radio waves suffer from errors due to fading and unwanted interference. Even in communication systems where the transmission channel is not radio based errors occur due to presence of noise in most of the human made devices. To correct these errors two main techniques are used nowadays in the telecommunication industry, namely forward error correcting coding and packet retransmission techniques. The latter method is mostly used in packet switched networks where a very low bit error rate is required and the packet delay constraint is not too tight.

The most efficient packet retransmission protocol is based on a selective automatic repeat request (ARQ) scheme. In this scheme the transmitter sends several data packets over an interface (e.g. radio channel) to the receiver. The data packets are protected by, for example, a cyclic redundancy check (CRC) code, which is used by the receiver to detect errors within a received data packet. If errors are detected by the CRC check then the receiver sends a negative acknowledgement signal to the transmitter to inform it of the erroneous packets. On the receipt of a negative acknowledgement signal, the transmitter retransmits only those data packets indicated by the negative acknowledgement signal as being in error. This retransmission process is repeated until either the CRC check is passed by all transmitted data packets or until the maximum allowed number of retransmissions is reached, or the delay per packet expires. Examples of this basic selective ARQ scheme may be found in the following papers: "Energy-conserving selective repeat ARQ protocols for wireless data networks", I. Chlamtac et al., Proc. PIRME, 1998; "Optimal design of error control schemes for packet radio networks", S. Gupta and M. E. Zarki, Proc. of International Conference on Personal Wireless Communications, 1994, pp. 229-233; and "Throughput analysis of ARQ selective-repeat protocol with time diversity in Markov channels", Proc. IEEE Globecom, 1995, pp. 1673-1677.

In this basic selective ARQ scheme, if a data packet fails the CRC check then this packet is discarded and its retransmission requested. This approach leads to poor throughput and large packet transmission delay especially for systems having a low signal-to-noise ratio (SNR).

In an alternative scheme, the erroneously received data packets are not discarded at the receiver but used to improve the data packet reliability by combining them with the next retransmitted copy of the same packet. This packet combining approach has been disclosed in several papers, for example: "Code Combining-a maximum likelihood decoding approach for combing an arbitrary number of noisy packets", D. Chase, IEEE Transactions on Communications, vol. COM-33, No. 5, 1985, pp. 385-393; "Type-1 hybrid ARQ scheme with time diversity for binary digital FM cellular radio", H. Zhou and R. H. Deng, IEE Proceedings on Communications, vol. 143, No. 1, 1996, pp. 29-36; and "Performance of punctured channel codes with ARQ for multimedia transmission in Rayleigh fading channels", H. Lou and A. S. Cheung, IEEE Vehicular Technologies Conference 46th, 1996, pp. 282-286.

However the packet combining techniques used in these papers minimise the packet error probability rather than the bit error probability.

In "Performance of punctured channel codes with ARQ for multimedia transmission in Rayleigh fading channels", H. Lou and A. S. Cheung, IEEE Vehicular Technologies Conference 46th, 1996, pp. 282-286 the authors present a type-II hybrid ARQ scheme (incremental redundancy) where more parity bits are sent whenever the CRC check on a data packet fails.

It is therefore an object of the present invention to provide an improved repeat transmission combining scheme.

### Summary of the Invention

This invention relates to an error correction method for data packets based on the automatic repeat packet retransmission mechanism. In particular a symbol-by-symbol optimal combining of the erroneous received data packets is presented.

According to the invention there is provided a method of recovering a received packet comprising the steps of:

    a) generating a soft value for each bit of the received packet;
    b) storing the soft values of the received packet;

c) performing an error check on the received packet; and

d) responsive to detection of an error:

i) receiving a retransmission of the packet;
ii) generating a soft value for each bit of the retransmitted packet;
iii) combining each generated soft value with the respective last stored soft values;
iv) storing the combined soft values;
v) performing an error check based on the thus combined soft values; and vi) responsive to detection of an error repeating steps i) to v).

The step of combining each soft output value of the retransmitted packet with the respective stored soft output value may comprise adding the respective soft values.

The method may comprise the step of determining a hard value from the soft values of the received packet. The error check of step c) may be performed on said hard value. The method may further comprise the step of determining a hard value from the combined soft values. The error check of step v) may be performed on said hard value.

The method may further comprise the step, prior to the step a) or i), of equalising the received packet. The error check may comprise a cyclic redundancy code check. In step vi), steps i) to v) may be repeated a predetermined number of times. In step vi), steps i) to v) may be repeated for the maximum number of retransmissions allowed by the system, or for the maximum delay per packet.

The invention also provides receiver circuitry for implementing such a method.

According to a further aspect of the invention there is also provided a receiver comprising:

e) input circuitry for receiving a transmitted packet;
f) generating circuitry, connected to the input circuitry, for generating a soft value for each bit of the received packet;
g) storage circuitry for storing the thus generated soft values;
h) error checking circuitry for performing an error check on the received packet; and
i) combining circuitry, wherein responsive to detection of an error:

i) the input circuitry receives a retransmission of the packet;
ii) the generating circuitry generates a soft value for each bit of the retransmitted packet;
iii) the combining circuitry combines each generated soft value with the respective stored soft values;
iv) the storage circuitry stores combined soft values in place of the stored soft values;
v) the error checking circuitry performs an error check based on the thus combined soft values,
vi) wherein i) to v) are repeated responsive to detection of an error in v).

A mobile communications system may include such a receiver.

This invention is concerned with a type I hybrid selective ARQ mechanism where both the information bits and the parity bits are retransmitted when a negative acknowledgement is received by the transmitter. This invention introduces a novel and optimal symbol-by-symbol soft combining technique. The ARQ scheme proposed in this invention is less complex than those combining techniques proposed in the references discussed above, and therefore easier to implement on a real telecommunication system.

## Brief Description of the Drawings

Figure 1 illustrates a flow chart of an exemplary implementation of the present invention;
Figure 2 illustrates an exemplary implementation of the present invention;
Figures 3(a) to 3(c) illustrate performance characteristics of the present invention compared to prior art techniques; and
Figure 4 illustrates exemplary performance characteristics of the present invention.

## Description of the Preferred Embodiment

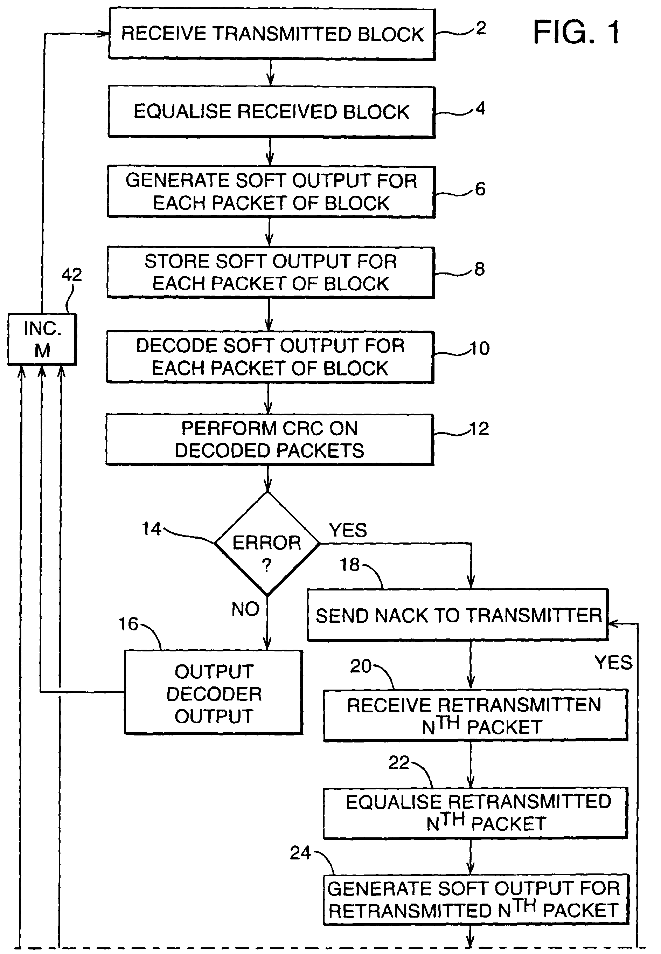

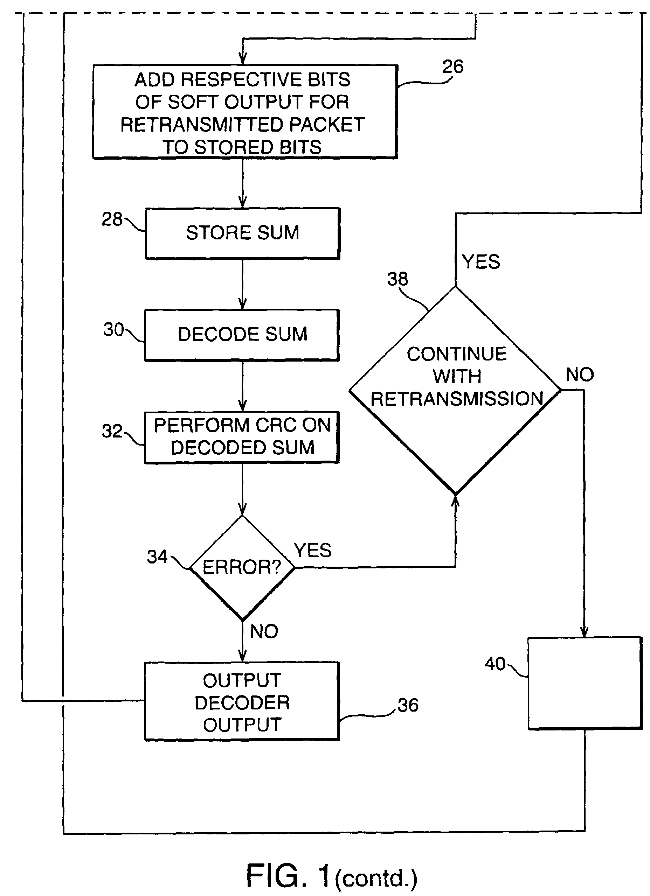

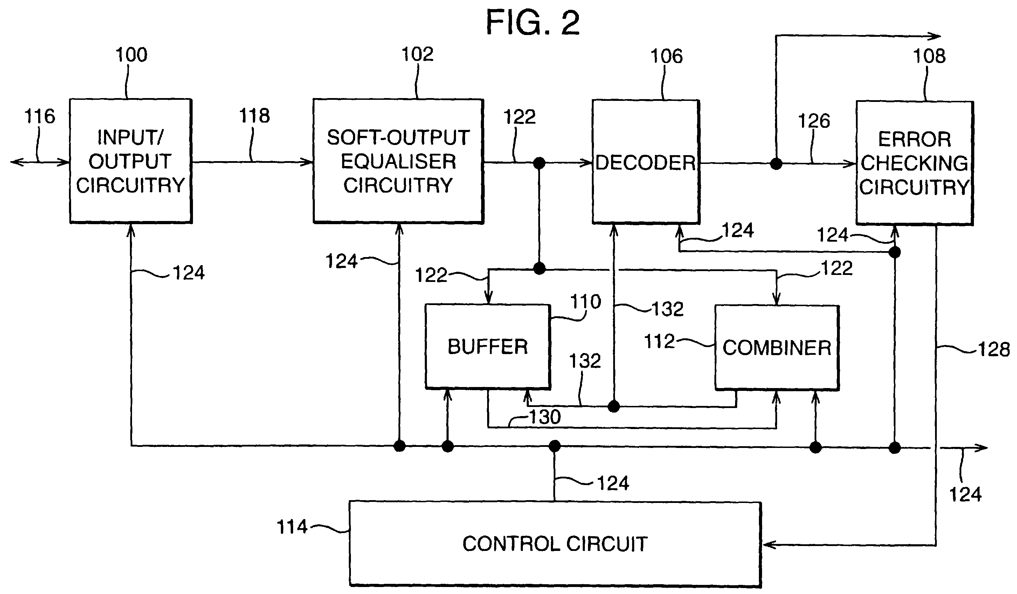

The soft combining technique according to the invention will now be described with reference to Figures 1 and 2. Figure 1 is a flow chart of an exemplary implementation of the invention, and Figure 2 is an exemplary implementation of circuitry for implementing the steps illustrated in Figure 1.

Referring to Figure 2 it can be seen that the receiver circuitry includes input/output circuitry 100, soft-output equaliser circuitry 102, a decoder 106, error checking circuitry 108, a buffer 110, a combiner 112, and a control circuit 114.

The receiver circuitry is connected to a transmission line 116 which is the transmission interface between the receiver and a transmitter (not shown). The input/output circuitry 100 is connected to the transmission line 116, and outputs received data packets on line 118 to the soft-output equaliser circuitry 102. The soft-output equaliser circuitry 102 outputs signals on line 122 to the decoder 106, the buffer 110 and the combiner 112. The decoder outputs signals on line 126 to the error checking circuitry 108. The error checking circuitry 108 outputs a signal on line 128 to the control circuit 114. The buffer outputs a signal on line 130 to the combiner 112, and the combiner outputs a signal on line 132 to the buffer 110 and the decoder 106. Each of the input/output circuitry 100, soft-output equaliser circuitry 102, decoder 106, error checking circuitry 108, buffer 110, and combiner 112 receive control signals from the control circuit 114. The signal on line 126 from the decoder 106 is presented to other parts of the receiver circuitry (not shown) for further processing after the error correction as described below

This invention can be implemented for the general packet radio services (GPRS) for GSM (see "Digital cellular telecommunications system; General radio service (GPRS); Mobile station-Base station subsystem Radio Control Layer/Medium access control layer specification, GSM 04.60). However this invention is not restricted to GSM systems and can be implemented in any communication system which includes a soft-output equaliser and an error-detecting device, and where packets are sent from a transmitter to a receiver and which has a repeat request mechanism. For the purposes of illustrating the present invention in the following description a specific example of a receiver in relation to a GPRS system is given, but it will be appreciated that the invention may be implemented in alternative receivers. The following example specifically relates to a GPRS system. RLC/MAC blocks are the smallest packet within GPRS.

In a first step 2 the input/output circuitry receives an Mth radio link control (RLC)/ medium access control (MAC) block, including an nth transmitted packet, on the communications link 116 from the transmitter (not shown). In this example the block is transmitted over a radio interface, but it will be appreciated that the invention may be utilised on any type of interface, wireless or otherwise.

The format of the particular block and the packets contained therein is not important to the present invention, and the present invention can be implemented with any type of blocks or packets.

In a step 4 the soft-output equaliser circuitry 102 inputs the received block including the nth data packet from the input/output circuitry on line 118, and performs channel estimation and then channel equalisation, the implementation of which will be familiar to one skilled in the art.

If the transmitter (i.e. the mobile station or the base transceiver station) is multi-time slot capable then the equaliser shown in Figure 1 is formed by many equalisers; one for each timeslot used by the transmitter, and there is also one buffer associated with each equaliser. These buffers communicate to one another either by sharing the same physical memory or by other mechanism which is outside the scope of the present invention. Thus when a time-slot used for a radio channel is changed during a transmission then the buffer content corresponding to the previous time-slot is stored into the buffer corresponding to the newly allocated radio channel. Thus, the system operates even when the radio channel is reassigned. The reference to time-slots does not restrict the implementation of this algorithm. Any transmission channel has a buffer allocated and all buffers communicate to one another.

In a step 6 the soft output equaliser circuitry 102 generates the soft output for each data packet in the received block, and outputs these soft outputs on lines 122. The thus generated soft outputs are presented on signal lines 122 to the decoder 106 and the buffer 110.

The soft output of each bit of a packet is SO, where:

$$SO = \log \frac{\{\text{probability that bit} = 1, \text{conditioned by received signal}\}}{\{\text{probability that bit} = 0, \text{conditioned by received signal}\}}$$

Thus, the soft output is basically the logarithm of a ratio of two probabilities. This generation of soft values is known. If the result of this calculation is positive it is estimated that the bit is 1, otherwise the bit is 0.

Not shown in Figure 1, but understood by one skilled in the art, is the step of de-interleaving the received block to recover the transmitted packets included in the block in their original order. This de-interleaving may be done at the output of the soft output equaliser circuitry 102.

It will be appreciated that the operation of the receiver circuitry described herein is controlled by the control circuit 114. The specific control of the various blocks in the receiver circuitry is outside the scope of the invention and is not presented here in detail. Only those aspects of the operation of the control circuit considered necessary to describe the invention are described.

Under control of the control signals 124 from the control circuit 114 the soft outputs of the received block on line 122 are stored in the buffer 110 in a step 8. At the same time the soft outputs on lines 122 are decoded by the decoder 106 in a step 10 to produce a hard output for each packet of the received block. The hard outputs are then presented on lines 126 to the error check circuit 108. The decoder decodes the soft output values, i.e. determines whether the result of the logarithm for each bit is 1 or 0 and outputs the appropriate bit, this being the hard value.

In a step 12 the error checking circuitry performs an error check on the decoded hard output packets of the received block, and generates a signal on line 128 to the control circuit 114 indicating the result of the error check for each packet of the block. In the preferred embodiment the error check is a CRC check, performed over each individual packet such that the error check generates an error signal for each individual packet. If the error signal on line 114 indicates, in a step 14, that no errors are detected for all packets of the block, then the control circuit controls other circuitry in the receiver via control lines 124 to receive the hard value at the output of the decoder on lines 126. The hard value is then presented on line 126 to circuitry elsewhere in the receiving circuitry for further decoding and routing. This is represented by step 16.

If no errors are detected, then in a step 42 the control circuit 114 controls the input/output circuitry 100 via lines 124 to send an acknowledgement signal back to the transmitter. This acknowledgement signal indicates the successful transmission of an RLC/MAC block. The transmitter then sends the next block and the input/output circuitry 100 receives the next block on the transmission line 116. Steps 2 to 12 are repeated for that block.

If the error signal on line 128 from the error check circuit 108 indicates, in step 14, that the decoded hard output of at least one data packet of the block, say the nth data packet, has failed the error check, then the control circuit controls the input/output circuitry via lines 124 to request the transmitter, via lines 116, to retransmit that same data packet again. The input/output circuitry 100 thus sends a negative acknowledgement signal to the transmitter on lines 116, as illustrated by step 18. The negative acknowledgement signal identifies the failed data packet.

Responsive to the negative acknowledgement signal, the transmitter (not shown) retransmits the nth data packet again, and as illustrated by step 20 the input/output circuitry 100 once again receives the nth data packet on the transmission line 116.

It will be appreciated that several packets in one block may fail the error check, and consequently several packets be retransmitted. The buffer will store the original of those packets and then the combination result of those packets as described below. Packets will pass the error checks after different numbers of retransmissions.

The frequency of sending the acknowledgement/negative acknowledgement signal is a trade off between the amount of memory required at the receiver to store all erroneously received RLC/MAC blocks and the reverse channel signalling overhead. In the same time the content of the buffer 110 which stores the soft values of the error free RLC/MAC block is emptied when an acknowledgement for all stored soft value RLC/MAC blocks is sent back to the transmitter.

As before, the retransmitted nth data packet is output on line 118 to the soft-output equaliser circuitry 102 where it is equalised in a step 22. In a step 24 the soft output equaliser circuitry 102 generates the soft values of the retransmitted data packet as before. The soft values of the retransmitted data packet are output on lines 122.

Under the control of the control lines 124 of the control circuit 114, the soft values on line 122 are presented to the combiner 112 together with the soft values for the originally transmitted packet stored in the buffer 110. The soft values of the originally transmitted signal are presented on line 130 to the combiner 112.

In a step 26 the combiner 112 adds respective ones of the soft values associated with the retransmitted packet to respective ones of the soft values stored in the buffer 110, which at this stage represent the soft output of the originally transmitted packet. The result of this combining operation is output on line 132, and stored in the buffer in place of the soft output of the originally transmitted signal. The buffer 110 thus stores the thus combined soft values.

According to the invention, the combiner 112 combines the soft values and not the hard values. This is the optimum combining technique because it minimises the bit error rate. By adding two soft values, i.e. the values SO, the probabilities at the argument of the log function are multiplied. As the packet retransmission processes are independent it can be proven mathematically that the sum of all the SO values per bit (or product of probabilities) gives the minimum bit error rate. This is a per bit optimisation: the combining scheme of the soft bit values (SO) which minimises the bit error rate. The outcome of this optimisation problem is that the sum of the soft values gives the minimum bit error rate. This is very appealing from an implementation point of view, because the previous soft values can be simply added to the new soft values to give the optimum scheme.

This contrasts with the packet combining of the basic ARQ scheme described in the introduction. For packet combining a joint (global) equalisation and decoding is performed packet by packet. A joint packet combining technique is found which minimises the packet error rate. In a multi-path environment when the equaliser is required this joint optimisation problem is very difficult to implement on a real system.

On the contrary, the present invention uses a simple bit by bit equaliser which decouples the equalisation and decoding problems.

The drawback of packet combining is that the formulae produced by this joint optimisation problem are cumbersome and not easy to implement, whilst for bit combining a simple addition is all that is required.

The combined signal on lines 132 is also presented as an input to the decoder 106. In a step 30 the decoder 106 decodes the combined soft values and presents the hard values on line 126 to the error check circuit 108. As before, in a step 32 the error check circuit performs an error check on the hard values and outputs a signal on line 128 to the control circuit 114 indicating the result of the error check.

In a step 34 the control circuit 114 determines whether the error check has passed or failed. If there is no error, then the control circuit 114, in a step 36, outputs the hard values on line 126 for processing in the receiver. In the step 42 the control circuit then controls the input/output circuitry 100 to send an acknowledgement signal to the transmitter, and prepares to receive the next block M. the hard values on line 126 are derived directly from the combined soft values in the buffer 110.

If in the step 34 the error signals from the error check circuit still indicate that the error check has failed then the control circuit moves onto a step 38.

In the step 38 the control circuit determines whether it is appropriate to request a further retransmission of the data packet. If it is appropriate, then the steps 18 to 34 are repeated again and a further negative acknowledgement signal is sent to the transmitter, requesting a retransmission of the erroneous packet of the RLC/MAC block. On the receipt of the retransmitted packet the receiver again derives the soft equalizer output for this packet as described above. This soft value is then added to the buffer content and their sum passed to the decoder. Mathematically this can be expressed as

$$L_k = \sum_{i=1}^{N} L_{ki}$$

where $L_k$ is the total soft value corresponding to the $k$th received coded bit of a packet after $N$ packet retransmissions. Similarly $L_{ki}$ is the soft value corresponding to the $k$th received coded bit of a packet at the $i$th block retransmission. This bit-by-bit soft combining technique is optimal in minimising the bit error rate.

A packet of an RLC/MAC block is retransmitted a number of times until it passes the CRC check. The number of blocks combined gives the order of the diversity gain obtained in the proposed scheme. Thus this scheme may be called "Diversity-ARQ", to highlight the diversity gain and discriminate among others existing ARQ mechanisms.

If it is not appropriate to request further retransmissions, then the control circuit moves onto a step 40 in which the combined packet in the buffer 110 is output on line 130, together with an appropriate error signal for processing in the receiver. The next layer in the receiver can then determine how to process the erroneous packet.

The control circuit then controls the input/output circuitry in the step 42 to receive the next transmitted packet M.

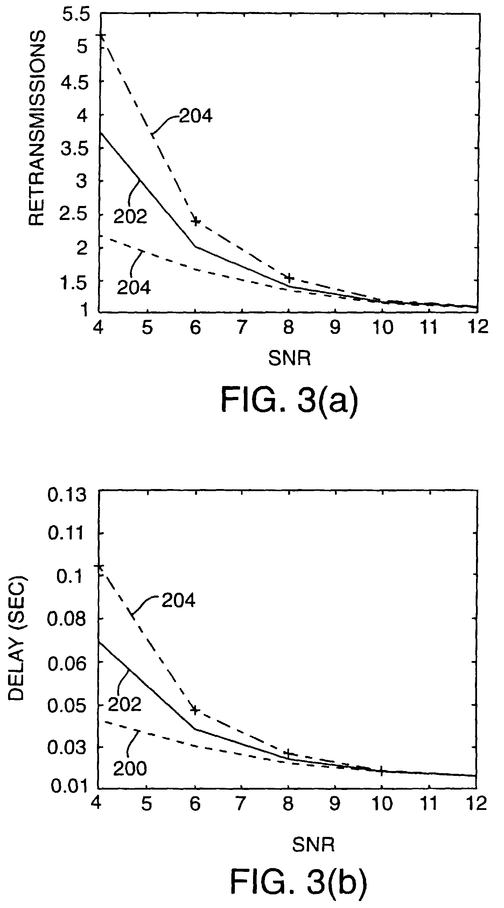

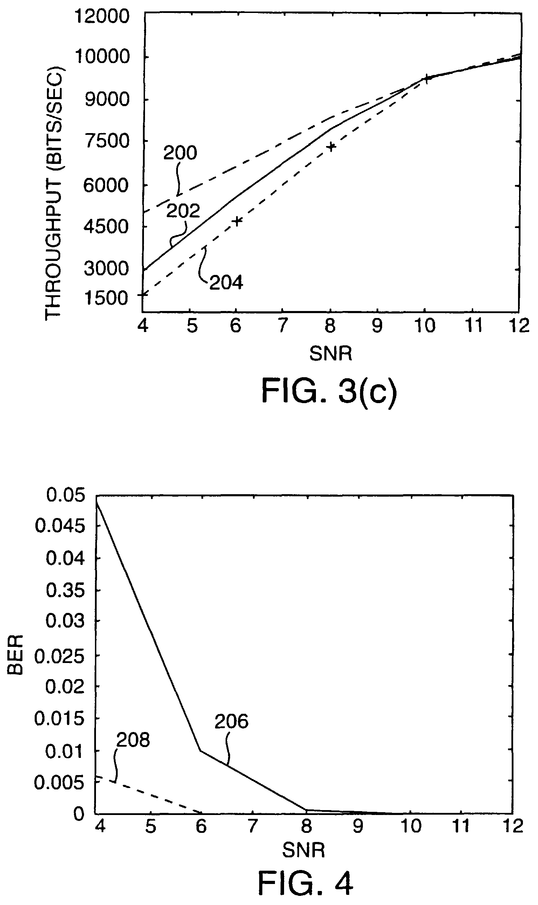

A performance comparison between the diversity automatic repeat request scheme of the present invention and the basic automatic repeat request scheme described in the introduction hereinabove is shown in Figures 3 and 4.

Figure 3(a) is a plot of retransmissions against signal-to-noise ratio, Figure 3(b) is a plot of delay (in seconds) against signal-to-noise ratio, and Figure 3(c) is a plot of throughput (in bits per second) against signal to noise ratio. In Figures 3(a) to 3(c) the lines 200 represent the performance of the diversity ARQ scheme of the present invention, the lines 202 represent the prior art ARQ combiner performance, and the lines 204 represent the basic ARQ performance.

It can be seen from the simulation results of Figure 3 that the diversity-ARQ mechanism of the present invention out-performs the basic ARQ mechanism throughout. In particular at low signal-to-noise ratios the throughput is almost three times higher with the diversity ARQ than with the basic ARQ.

Figure 4 shows a comparison of the bit error rates (BERs) obtained after two and three block transmissions per RLC/MAC block. Line 208 illustrates performance for two block transmissions, and line 206 illustrates performance for three block transmissions. As can be seen form Figure 4 after three retransmissions (represented by line 206), at a signal-to-noise ratio greater than 6dB the average bit error rate goes almost to zero. This is obtained at an increase in the block transfer delay. In all the above simulations coding scheme 1 (CS-1 of GPRS) was used.

**Claims**

1. A method of recovering a received packet comprising the steps of:

   a) generating a soft value for each bit of the received packet;
   b) storing the soft values of the received packet;
   c) performing an error check on the received packet; and
   d) responsive to detection of an error:

i) receiving a retransmission of the packet;

ii) generating a soft value for each bit of the retransmitted packet;

iii) combining each generated soft value with the respective last stored soft values;

iv) storing the combined soft values;

v) performing an error check based on the thus combined soft values; and

vi) responsive to detection of an error repeating steps i) to v).

2. The method of claim 1 wherein the step of combining each soft output value of the retransmitted packet with the respective stored soft output value comprises adding the respective soft values.

3. The method of claim 1 or claim 2 further comprising the step of determining a hard value from the soft values of the received packet.

4. The method of claim 3 wherein the error check of step c) is performed on said hard value.

5. The method of any preceding claim further comprising the step of determining a hard value from the combined soft values.

6. The method of claim 5 wherein the error check of step v) is performed on said hard value.

7. The method of any one of claims 1 to 4 wherein if no error is detected in step c) the hard value forms an output.

8. The method of any one of claims 1 to 6 wherein if no error is detected in step v) the hard value forms an output.

9. The method of any preceding claim further comprising the step, prior to the step a) or i), of equalising the received packet.

10. The method of any preceding claim, wherein the error check comprises a cyclic redundancy code check.

11. The method of any preceding claim wherein in step vi), steps i) to v) are repeated a predetermined number of times.

12. The method of any preceding claim wherein in step vi), steps i) to v) are repeated for the maximum number of retransmissions allowed by the system, or for the maximum delay per packet.

13. The method of operating a receiver of a mobile communications system according to any one of claims 1 to 13.

14. A receiver comprising:

a) input circuitry for receiving a transmitted packet;

b) generating circuitry, connected to the input circuitry, for generating a soft value for each bit of the received packet;

c) storage circuitry for storing the thus generated soft values;

d) error checking circuitry for performing an error check on the received packet; and

e) combining circuitry, wherein responsive to detection of an error:

i) the input circuitry receives a retransmission of the packet;

ii) the generating circuitry generates a soft value for each bit of the retransmitted packet;

iii) the combining circuitry combines each generated soft value with the respective stored soft values;

iv) the storage circuitry stores combined soft values in place of the stored soft values;

v) the error checking circuitry performs an error check based on the thus combined soft values,

vi) wherein i) to v) are repeated responsive to detection of an error in v).

**15.** A mobile communications system including the receiver of claim 14.

FIG. 1

```
┌─────────────────────────────────┐
│   RECEIVE TRANSMITTED BLOCK     │──2
└─────────────────────────────────┘
                │
                ▼
┌─────────────────────────────────┐
│     EQUALISE RECEIVED BLOCK     │──4
└─────────────────────────────────┘
                │
                ▼
┌─────────────────────────────────┐
│   GENERATE SOFT OUTPUT FOR      │──6
│     EACH PACKET OF BLOCK        │
└─────────────────────────────────┘
                │
                ▼
┌─────────────────────────────────┐
│     STORE SOFT OUTPUT FOR       │──8
│     EACH PACKET OF BLOCK        │
└─────────────────────────────────┘
                │
                ▼
┌─────────────────────────────────┐
│   DECODE SOFT OUTPUT FOR        │──10
│     EACH PACKET OF BLOCK        │
└─────────────────────────────────┘
                │
                ▼
┌─────────────────────────────────┐
│      PERFORM CRC ON             │──12
│     DECODED PACKETS             │
└─────────────────────────────────┘
```

42

┌──────┐
│ INC. │
│  M   │
└──────┘

14 — ERROR ? — YES

NO

18 — SEND NACK TO TRANSMITTER

16 — OUTPUT DECODER OUTPUT

20 — RECEIVE RETRANSMITTEN $N^{TH}$ PACKET

YES

22 — EQUALISE RETRANSMITTED $N^{TH}$ PACKET

24 — GENERATE SOFT OUTPUT FOR RETRANSMITTED $N^{TH}$ PACKET

ADD RESPECTIVE BITS
OF SOFT OUTPUT FOR
RETRANSMITTED PACKET
TO STORED BITS — 26

28 — STORE SUM

30 — DECODE SUM

32 — PERFORM CRC ON
DECODED SUM

34 — ERROR? — YES

NO

OUTPUT
DECODER
OUTPUT — 36

38 — CONTINUE
WITH
RETRANSMISSION

YES

NO

40 —

FIG. 1 (contd.)

# FIG. 2

EP 1 018 816 A1

FIG. 3(a)

FIG. 3(b)

FIG. 3(c)

FIG. 4

| | European Patent Office | EUROPEAN SEARCH REPORT | Application Number EP 98 30 8548 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 98 37660 A (ERICSSON GE MOBILE INC) 27 August 1998 * page 7, line 12 - line 25 * * page 8, line 28 - page 9, line 34 * * page 11, line 9 - line 27 * | 1-8, 13-15 | H04L1/18 |
| Y | * figure 6 * | 9,11,12 | |
| X | US 5 568 513 A (DENT PAUL W ET AL) 22 October 1996 | 1-8,10, 13-15 | |
| Y | * column 5, line 1 - column 7, line 67 * | 9,11,12 | |
| Y | EP 0 729 254 A (ALCATEL NV ;ALCATEL ITALIA (IT)) 28 August 1996 * abstract * | 9 | |
| Y | METZNER JOHN J ; CHUNG JONG-MOON: "Efficient energy utilization with a time constraint and time varying channels" PROCEEDINGS OF THE 1997 IEEE INTERNATIONAL SYMPOSIUM ON CONSUMER ELECTRONICS, ISCE'97, 2 - 4 December 1997, pages 183-186, XP002101854 Singapore, Singapore * abstract * * section 1 * | 11,12 | |
| | | | TECHNICAL FIELDS SEARCHED (Int.Cl.6) |
| | | | H04L |
| A,D | CHASE D: "Code Combining - A Maximum-Likelihood Decoding Approach for Combining an Arbitrary Number of Noisy Packets" IEEE TRANSACTIONS ON COMMUNICATIONS, vol. 33, no. 5, 24 May 1985, pages 385-393, XP002091628 * section II * | 1,14 | |

-/--

| The present search report has been drawn up for all claims | | |
|---|---|---|
| Place of search THE HAGUE | Date of completion of the search 4 May 1999 | Examiner De Riccardis, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 018 816 A1

## EUROPEAN SEARCH REPORT

Application Number

EP 98 30 8548

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | HONG ZHOU ET AL: "A HYBRID ARQ SCHEME WITH DIVERSITY COMBINING FOR LAND MOBILE RADIO" FROM PIONEERS TO THE 21ST. CENTURY, DENVER, MAY 10 - 13, 1992, vol. 2, no. CONF. 42, 10 May 1992, pages 902-905, XP000339927 INSTITUTE OF ELECTRICAL AND ELECTRONICS ENGINEERS * section 2.1 * | 1,14 | |

TECHNICAL FIELDS SEARCHED (Int.Cl.6)

The present search report has been drawn up for all claims

| Place of search | Date of completion of the search | Examiner |
|---|---|---|
| THE HAGUE | 4 May 1999 | De Riccardis, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

15

## ANNEX TO THE EUROPEAN SEARCH REPORT
## ON EUROPEAN PATENT APPLICATION NO.

EP 98 30 8548

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-1999

| Patent document cited in search report | | Publication date | Patent family member(s) | | Publication date |
|---|---|---|---|---|---|
| WO 9837660 | A | 27-08-1998 | US 5870406 A | | 09-02-1999 |
| | | | AU 6167998 A | | 09-09-1998 |
| | | | EP 0962068 A | | 08-12-1999 |
| US 5568513 | A | 22-10-1996 | AU 677338 B | | 17-04-1997 |
| | | | AU 6906894 A | | 12-12-1994 |
| | | | CA 2139770 A | | 24-11-1994 |
| | | | CN 1110886 A,B | | 25-10-1995 |
| | | | DK 2695 A | | 10-01-1995 |
| | | | FI 950110 A | | 10-01-1995 |
| | | | GB 2283643 A,B | | 10-05-1995 |
| | | | HK 1006627 A | | 05-03-1999 |
| | | | IT 1269744 B | | 15-04-1997 |
| | | | NO 950103 A | | 02-03-1995 |
| | | | SE 9404586 A | | 27-02-1995 |
| | | | SG 45279 A | | 16-01-1998 |
| | | | WO 9427377 A | | 24-11-1994 |
| | | | US 5715278 A | | 03-02-1998 |
| | | | US 5701329 A | | 23-12-1997 |
| EP 0729254 | A | 28-08-1996 | IT MI950355 A | | 26-08-1996 |
| | | | BR 9600786 A | | 23-12-1997 |
| | | | CA 2170195 A | | 25-08-1996 |
| | | | CN 1138251 A | | 18-12-1996 |
| | | | JP 8321795 A | | 03-12-1996 |
| | | | NO 960575 A | | 26-08-1996 |
| | | | US 5751768 A | | 12-05-1998 |